# EUROPÄISCHE PATENTANMELDUNG

(11) **EP 2 136 322 A1**
(43) Veröffentlichungstag der Anmeldung: **23.12.2009**
(21) Anmeldenummer: 08011010.9
(22) Anmeldetag: 18.06.2008
(51) Int. Cl.: G06Q 10/00

(54) **Kollaboratives Bearbeitungsverfahren und -system**

(71) Anmelder: Thom, Marc, 69115 Heidelberg (DE)
(72) Erfinder: Thom, Marc, 69115 Heidelberg (DE)

(57) **Zusammenfassung**

Eine Technik zum Verwalten einer kollaborativ lösbaren Aufgabe umfasst die Schritte des Empfangens eines Angebots zur Erstellung einer Teillösung, des Bereitstellens einer auf Basis der Aufgabe erstellten Teilaufgabe, des Empfangens einer der Teilaufgabe zugeordneten Teillösung und des Zusammenführens von Teillösungen zu einer der Aufgabe zugeordneten Lösung.

## Beschreibung

### Gebiet der Erfindung

Die Erfindung betrifft eine Bearbeitungstechnik. Insbesondere betrifft die Erfindung eine Technik für eine verteilte Bearbeitung einer Aufgabe.

### Hintergrund der Erfindung

Ein bekanntes Konzept zur Lösung einer Aufgabe ist die Projektarbeit. Um ein Projekt zu bearbeiten, wird dazu allgemein ein Projektteam zusammengestellt, welches in der Regel mehrere Bearbeiter mit zumindest näherungsweise bestimmten Fähigkeiten und Verfügbarkeiten umfasst. Die Aufgabe wird in Teilaufgaben zerlegt, die an Bearbeiter verteilt werden. Jeder Bearbeiter erstellt zu der ihm zugeordneten Teilaufgabe eine Teillösung und anschließend wird aus mehreren Teillösungen, meist sukzessive, eine Lösung für die ursprüngliche Aufgabe erstellt.

Diese einfache Vorgehensweise berücksichtigt jedoch einige typische Probleme nicht, die häufig bei einer verteilten Bearbeitung eines Problems auftreten. Derartige Probleme können eine Verwaltung von Projektaufgaben derart komplex werden lassen, dass es schwierig ist, eine geeignete Planung von Arbeitsschritten durchzuführen. In manchen Fällen, insbesondere bei Projekten mit einer großen Anzahl Bearbeitern und Teilproblemen, kann ein für die Verwaltung des Projekts erforderlicher Aufwand derart ansteigen, dass er in einem nicht mehr akzeptablen Verhältnis zum Aufwand der tatsächlichen Bearbeitung von Teilaufgaben steht. In der Folge kann das Projekt möglicherweise im Rahmen der Vorgaben (z. B. Zeit, Ressourcen, Qualität) wirtschaftlich unsinnig oder sogar undurchführbar werden.

Beispielsweise ist es häufig so, dass ein Bearbeiter eine ihm anvertraute Teilaufgabe erst dann bearbeiten kann, wenn ihm die Teillösungen einer oder mehrerer logisch vorgelagerten Teilaufgaben vorliegen. Ebenso können einer oder mehrere Bearbeiter auf eine Teillösung des Teilproblems des betrachteten Bearbeiters warten. Ein Verzug bei der Bereitstellung einer Teillösung kann eine Verzögerung bei der Bearbeitung weiterer Teilaufgaben bedingen und so zu einer Kettenreaktion oder sogar zu einem Lawineneffekt im Verzug weiterer Teillösungen führen. Hinzu kommt, dass gewisse schwer oder gar nicht ersetzbare Ressourcen, wie beispielsweise ein zu mietendes Werkzeug, eine besondere Testumgebung oder ein speziell qualifizierter Bearbeiter, eventuell nur in einem gewissen Zeitfenster für das Projekt verfügbar sind. Eine Verzögerung beim Erreichen des Projektzustandes, in welchem diese Ressource für das Projekt verwendet werden kann, verkleinert das zur Verfügung stehende Zeitfenster. In der Folge ist die Ressource nicht lange genug oder gar nicht für das Projekt verfügbar, was einen Projekterfolg nachhaltig gefährden kann.

Ein anderes wiederkehrendes Problem sind unvorhergesehene Ereignisse, die eine Anpassung einer geplanten Vorgehensweise erfordern. Es kann sich beispielsweise während einer Bearbeitung einer Teilaufgabe herausstellen, dass die Teilaufgabe nicht abschließend bestimmt ist, nicht auf eine geplante Weise lösbar ist oder Randbedingungen erfordert, die nicht immer vorliegen. In solchen Fällen kann es beispielsweise erforderlich sein, die betreffende Teilaufgabe in mehrere Teilaufgaben aufzuteilen, sie neu bzw. anders zu formulieren oder eine logische oder zeitliche Abhängigkeit der Teilaufgabe von anderen Teilaufgaben bzw. deren Teillösungen zu verändern. Es kann auch erforderlich sein, eine bereits erstellte Teillösung zu verwerfen und eine ihr zugeordnete Teilaufgabe unter Berücksichtigung neu hinzugekommener bzw. neu erkannter Aspekte erneut zu lösen. Solche Änderungen können Auswirkungen auf inhaltliche und/oder organisatorische Vorgaben anderer Teilaufgaben bzw. Teillösungen haben, so dass bei einer Anpassung einer geplanten Vorgehensweise ebenfalls Schneeball- und Lawineneffekte zu befürchten sind.

Weitere organisatorische Schwierigkeiten können dadurch entstehen, dass mehrere unterschiedliche Bearbeiter unterschiedliche Technologien zur Lösung der ihnen jeweils anvertrauten Teilaufgabe verwenden. So lange die verwendeten Technologien interoperabel sind, kann eine solche Vorgehensweise zielführend sein. Schwierigkeiten können nicht nur bei einer Interoperation von Teillösungen, die auf unterschiedlichen Technologien aufbauen, entstehen, sondern auch dann, wenn eine erstellte Teillösung oder deren Bauwerk von einem anderen als dem ursprünglichen Bearbeiter bearbeitet wird. Dies kann beispielsweise im Rahmen einer Unterstützung oder Ablösung eines Bearbeiters durch einen anderen, oder bei einer Wartung einer Teillösung erforderlich sein. Erfahrungsgemäß gehen unterschiedliche Bearbeiter mit unterschiedlichen Vorlieben, Annahmen und Bearbeitungsweisen an eine ihnen gestellte Teilaufgabe heran, so dass eine von einem ersten Bearbeiter gewählte Vorgehensweise für einen zweiten Bearbeiter unter Umständen nur noch unter hohem Aufwand oder gar nicht mehr nachvollziehbar ist.

Unterschiedliche Vorschläge für Systeme zur Unterstützung von Projektarbeit wurden in der Vergangenheit vorgebracht. Mit Bezug auf die Aufgabe des Erstellens von Computer-Code wird in der deutschen Patentanmeldung DE 102 33 971 A1 eine Technik vorgeschlagen, Computer-Code mittels Code-Schablonen aus Modellen automatisch zu generieren, wobei die Modelle erweiterbare Instanzen von Meta-Modellen sind.

Der Erfindung liegt die Aufgabe zugrunde, eine Technik anzugeben, die geeignet ist, mehrere Bearbeiter dynamisch bei einer kollaborativen Bearbeitung einer Aufgabe zu unterstützen.

### Zusammenfassung der Erfindung

Diese Aufgabe wird durch ein Verfahren nach Anspruch 1, ein Computerprogrammprodukt nach den Ansprüchen 9 und 10 und eine Vorrichtung nach Anspruch 11 gelöst. Bevorzugte Ausführungsformen sind in den abhängigen Ansprüchen angegeben.

Gemäß einem ersten Aspekt umfasst ein Verfahren zum Bearbeiten einer kollaborativ lösbaren Aufgabe die Schritte es Empfangens eines Angebots zur Erstellung einer Teillösung, des Bereitstellens einer auf Basis der Aufgabe erstellten Teilaufgabe, des Empfangens einer der Teilaufgabe zugeordneten Teillösung und des Zusammenführens von Teillösungen zu einer der Aufgabe zugeordneten Lösung.

Eine kollaborativ lösbare Aufgabe kann jede Aufgabe sein, die sich in irgendeiner Weise dazu eignet, in Teilaufgaben unterteilt zu werden, beispielsweise ein Hausbau, eine Entwicklung einer Steuerung einer Produktionsanlage oder auch ein Erstellen eines Computerprogramms.

Das Verfahren kann ein Erstellen mehrerer Teilaufgaben umfassen. Eine erste Teilaufgabe kann von einer zweiten Teilaufgabe abhängig sein, indem eine der zweiten Teilaufgabe zugeordnete zweite Teillösung vorliegen muss, bevor eine der ersten Teilaufgabe zugeordnete erste Teillösung erstellt werden kann. Eine Teilaufgabe kann auch von mehreren anderen Teilaufgaben abhängig sein und mehrere Teilaufgaben können von einer Teilaufgabe abhängig sein. Nicht voneinander abhängige Teilaufgaben können gleichzeitig (parallel) bearbeitet werden, das heißt, für diese Teilaufgaben können nebenläufig jeweils zugeordnete Teillösungen erstellt werden.

In einer Variante können mehrere Teilaufgaben derart aus der Aufgabe erstellt werden, dass möglichst viele Teilaufgaben gegenseitig voneinander unabhängig sind, und so eine möglichst große Parallelität bei einer Bearbeitung der Teilaufgaben erreicht werden kann.

Das Verfahren kann ferner den Schritt des Speicherns wenigstens einer Teillösung umfassen. So kann eine Teillösung vorgehalten werden, bis sie mit wenigstens einer anderen Teillösung zusammengeführt werden kann. Die eine oder mehreren Teillösungen können, sofern es sich bei ihnen um nichtkörperliche Objekte handelt, beispielsweise in einer Datenbank abgelegt werden. Die Datenbank kann Verknüpfungen zwischen einer Teillösung und weiteren Informationen bereitstellen, insbesondere ein Teilproblem und einen Bearbeiter.

Ein Angebot kann einen Hinweis auf eine Kapazität eines Bearbeiters beinhalten. Eine Kapazität kann beispielsweise in Form einer Zeitangabe oder in Form einer Personen-Zeitangabe, wie beispielsweise in Personentagen oder Personenjahren (auch bekannt als Manntage und Mannjahre) ausgedrückt werden. In anderen Fällen kann eine Kapazität beispielsweise in Form eines Verfügbarkeitszeitraums angegeben werden.

Das Verfahren kann ein Bestimmen einer einer Teilaufgabe zugeordneten Komplexität umfassen. Die Komplexität kann beispielsweise in den gleichen oder entsprechenden Einheiten wie die Kapazität ausgedrückt werden. Alternativ oder zusätzlich können Komplexitäten auch z. B. monetäre Angaben, Energie- und/oder Verbrauchsmittelangaben umfassen, die beispielsweise auf einen Aufwand hinweisen, der für eine Bereitstellung einer der Teilaufgabe zugeordneten Teillösung (bzw. einer der Aufgabe zugeordneten Lösung) veranschlagt ist.

Das Bestimmen der Komplexität kann den Umstand berücksichtigen, dass üblicherweise ein gewisser Aufwand (der ggf. ebenfalls durch eine Komplexität ausdrückbar ist) erforderlich ist, um eine Teilaufgabe zu erstellen, um eine zugeordnete Teillösung zu empfangen und diese mit einer oder mehreren Teillösungen zusammenzuführen. Derartige Aufwände werden unter dem Begriff "Overhead" subsummiert. Die Summe der einen Overhead berücksichtigenden Komplexitäten aller aus einer Aufgabe erstellten Teilaufgaben kann daher die Komplexität der ungeteilten Aufgabe übersteigen.

Mit einer steigenden Anzahl Teilaufgaben, die aus der Aufgabe erstellt werden, steigt allgemein auch die Overhead-behaftete Komplexität im Verhältnis zu einer Summe der Bearbeitungs-Komplexitäten aller Teilaufgaben. Dieser Effekt kann bei der Erstellung der Teilaufgaben berücksichtigt werden, indem bevorzugt Teilaufgaben einer optimierten Komplexität (im sogenannten "sweet spot", der zwischen einer maximalen und einer minimalen Komplexität liegt) bestimmt werden.

Die Teilaufgabe kann in Abhängigkeit von dem Angebot erstellt sein. Die Abhängigkeit kann beispielsweise kausal sein, durch Erstellen einer Teilaufgabe als Reaktion auf ein Empfangen eines Angebots. Ferner kann die Teilaufgabe in Abhängigkeit von Informationen erstellt werden, die von dem Angebot umfasst sind. Die Abhängigkeit kann zum Beispiel auch logisch sein, indem bevorzugt eine Teilaufgabe erstellt wird, deren zugeordnete Teillösung mit einer bereits vorliegenden oder erwarteten Teillösung zusammenführbar ist.

Die Teilaufgabe kann derart erstellt sein, dass die Komplexität der Teilaufgabe der Kapazität eines empfangenen Angebotes im Wesentlichen entspricht. In einer Variante können auch mehrere erstellte Teilaufgeben eine Summe von Komplexitäten aufweisen, die im Wesentlichen der in dem Angebot angegebenen Kapazität entspricht. Die erstellten Teilaufgaben können als "Paket" dem Bearbeiter zugeordnet werden. Teilaufgaben eines Bündels können dabei eine ähnliche Struktur aufweisen.

Der Schritt des Bereitstellens einer auf Basis der Aufgabe erstellten Teilaufgabe kann vor dem Schritt des Empfangens eines Angebots zur Erstellung einer Teillösung erfolgen. Beispielsweise kann eine Anzahl Teilaufgaben erstellt und gegebenenfalls auch bereitgestellt werden und ein Angebot eines Bearbeiters kann sich auf eines oder mehrere dieser Teilaufgaben beziehen. Eine Zuordnung einer Teilaufgabe zu einem Angebot bzw. zu einem Bearbeiter kann diesen Bezug berücksichtigen.

Das Erstellen einer Teilaufgabe kann derart erstellt sein, dass eine Struktur der Teilaufgabe wenigstens abschnittsweise einer Struktur einer zuvor erstellten Teilaufgabe entspricht. Insbesondere kann die zuvor erstellte Teilaufgabe von demjenigen Bearbeiter bearbeitet worden sein, dem auch die erstellte Teilaufgabe zugeordnet wird.

Eine Struktur kann beispielsweise in einer graphischen Repräsentation gegeben sein und eine Ähnlichkeit zweier Strukturen kann einem Übereinstimmen einer Anzahl graphischer Elemente der beiden Strukturen entsprechen. Hierfür kann auch beispielsweise ein Schwellenwert angegeben werden, beispielsweise können zwei Strukturen als einander entsprechend betrachtet werden, wenn weniger als 5% der Elemente ihrer jeweiligen graphischen Repräsentationen nicht miteinander übereinstimmen. Relevante Merkmale der graphischen Repräsentationen können beispielsweise Zustände und in sie eingehende bzw. von ihnen ausgehende Übergänge von/zu anderen Zuständen umfassen.

Die Aufgabe und/oder die Teilaufgabe kann jeweils auf Basis eines Zustands-Übergangs-Systems definiert sein. Ein Zustands-Übergangs-Systems (auch Endlicher Automat genannt) kann beispielsweise durch ein Netzwerk von Zuständen und die Zustände miteinander verbindende Übergänge (Transitionen) graphisch repräsentiert sein. Eine Definition von Teilaufgaben durch Zustands-Übergangs-Systeme ist beispielsweise dann bekannt, wenn die Aufgabe im Bereich der Steuer-, Mess-, Regel- oder Prozesstechnik angesiedelt ist. Alternativ zu Zustands-Übergangs-Systemen können beispielsweise auch Petri-Netze verwendet werden, deren graphische Repräsentationen dem Fachmann bekannt sind.

Das Verfahren kann den Schritt des Überwachens, ob eine einer Teilaufgabe zugeordnete Teillösung vor Ablauf einer der Teilaufgabe zugeordneten Bearbeitungszeit empfangen wurde, umfassen. Dies kann das Bestimmen und Abspeichern eines Zeitpunkts des Zuordnens einer Aufgabe zu einem Bearbeiter oder einem Angebot umfassen. Die Bearbeitungszeit kann in Abhängigkeit der Komplexität der Teilaufgabe bestimmt werden.

Eine Zuordnung kann zwischen zwei oder mehr der folgenden Informationen erfolgen: Bearbeiter, Angebot, Teilaufgabe, Komplexität der Teilaufgabe, Kapazität des Angebots, Bearbeitungszeit, Zeit der Zuordnung einer Teilaufgabe zu dem Bearbeiter oder zu dem Angebot, Bearbeitungszeit der Teilaufgabe, Hinweis auf eine oder mehrere bereits von diesem Bearbeiter bearbeitete Teilaufgaben, Hinweis auf eine bereitgestellte Teilaufgabe, für eine Bearbeitung der Teilaufgabe erforderliche Ressourcen, Randbedingungen für die Bearbeitung, ein Zeitpunkt, bis zu dem eine zugeordnete Teillösung erwartet wird. Weitere Informationen können ebenfalls umfasst sein. Einige oder alle dieser Informationen können gespeichert werden, beispielsweise in einer (relationalen) Datenbank.

Teilaufgaben können auf Basis einiger oder aller dieser Informationen erstellt sein. Allgemein kann das Verfahren den Schritt des Erstellens von Teilaufgaben umfassen.

Der Schritt des Zusammenführens kann nur dann ausgeführt werden, wenn in einem vorangehenden Schritt bestimmt wurde, dass die Teillösung die Teilaufgabe löst. Der vorangehende Schritt kann einen automatischen Test umfassen. Der automatische Test kann auf Basis von statischen oder dynamischen Testdaten durchgeführt werden; alternativ oder zusätzlich kann ein formaler Test durchgeführt werden, beispielsweise ein automatischer Beweis oder eine Kongruenzprüfung. Darüber hinaus kann ein Leistungswert bestimmt werden, der eine Effizienz (also eine Wirtschaftlichkeit der eingesetzten Mittel) bezeichnet, mit der die Teillösung die Teilaufgabe löst. Es kann in ähnlicher Weise auch ein Test von zusammengeführten Teillösungen erfolgen.

Das Verfahren kann rekursiv auf der erstellten Teilaufgabe durchgeführt werden. Insbesondere kann eine erstellte Teilaufgabe für eine andere Instanz des Verfahrens als Aufgabe genommen werden. Auf diese Weise kann eine Aufgabe in beliebig feiner Granularität in Teilaufgaben unterteilt werden. So kann das Erstellen von Teilaufgaben einer Angebotssituation folgen, indem aus einer bereits erstellten ersten Teilaufgabe weitere Teilaufgaben erstellt werden, wenn entsprechende Angebote vorliegen.

Gemäß einem weiteren Aspekt umfasst die Erfindung ein Computerprogrammprodukt mit Programmcodemitteln zur Durchführung des oben beschriebenen Verfahrens, wenn das Computerprogrammprodukt auf einer Verarbeitungseinheit läuft. Eine Verarbeitungseinheit kann beispielsweise in Form eines Steuerrechners gegeben sein.

Das Computerprogrammprodukt kann auf einem computerlesbaren Datenträger gespeichert sein. Beispielsweise kann das Computerprogrammprodukt auf einem beweglichen Datenträger, wie beispielsweise einer Diskette, einer Festplatte, einer CD oder einer DVD, oder auf einem festen Datenträger, wie beispielsweise einem Halbleiterspeicher (etwa ein RAM, ROM, EPROM, EEPROM, NOVRAM oder Flash) gespeichert sein.

Gemäß noch einem weiteren Aspekt umfasst eine Vorrichtung zur Verwaltung einer kollaborativ lösbaren Aufgabe eine erste Empfangseinrichtung zum Empfangen eines Angebotes zur Erstellung einer Teillösung, eine erste Verarbeitungseinrichtung zum Erstellen einer Teilaufgabe auf Basis der Aufgabe, eine Bereitstellungseinrichtung zur Bereitstellung der Teilaufgabe, ein zweite Empfangseinrichtung zum Empfangen einer Teillösung, und eine zweite Verarbeitungseinrichtung zur Zusammenführung von Teillösungen zu einer der Aufgabe zugeordneten Lösung.

Die Empfangseinrichtungen können miteinander identisch oder separat voneinander sein. Das gleiche gilt für die Verarbeitungseinrichtungen. Jedes der Empfangsmittel kann beispielsweise ein Netzwerk-Interface umfassen. Dieses Interface kann beispielsweise an ein Netzwerk angeschlossen sein, welches mit dem Internet verbunden sein kann. Die Bereitstellungseinrichtung kann beispielsweise einen Webserver, einen FTP-Server, eine Datenbank, ein anderes Repositorium oder eine Kombination aus diesen umfassen. Die Bereitstellungseinrichtung kann ebenfalls mit einem Netzwerk verbunden sein, welches mit dem Internet verbunden sein kann. In bekannter Weise kann ein Zugreifen auf Informationen und/oder Dienste eine Identifikation bzw. Authentifikation erfordern, beispielsweise durch Benutzernamen und Passwort.

Die Vorrichtung kann zusätzlich Datenbankmittel zur Speicherung von Teilaufgaben und/oder Teillösungen umfassen. Die Datenbankmittel können integriert mit der Bereitstellungseinrichtung oder separat von ihr ausgeführt sein.

Die Vorrichtung kann auch Datenbankmittel zur Speicherung von den Teillösungen zugeordneten Teilaufgaben, Bearbeitern, Angeboten und/oder Bearbeitungszeiten. Es können auch noch weitere Informationen in den Datenbankmitteln gespeichert und/oder einander bzw. den Teilaufgaben/Teillösungen zugeordnet sein.

Die Vorrichtung kann einen Zeitgeber zur Überwachung eines Ablaufs einer einer Teilaufgabe zugeordneten Bearbeitungszeit umfassen. Insbesondere kann der Zeitgeber dazu geeignet sein, ein Ablaufen einer Vielzahl voreingestellter Zeiten zu überwachen. Der Zeitgeber kann ein Zeitnormal umfassen und mehrere Bearbeitungszeiten können beispielsweise in den Datenbankmitteln gespeichert sein.

Die Vorrichtung kann eine Ausgabeeinrichtung zur Ausgabe einer der Aufgabe zugeordneten Lösung umfassen. Die Lösung kann mittels der Ausgabeeinrichtung ausgegeben werden, sobald sie aus Teillösungen zusammengeführt ist. Optional kann die Ausgabe auch erst nach Durchführung eines oder mehrerer Tests, ob die Lösung die Aufgabe löst, erfolgen. In einer Variante können mittels der Ausgabeeinrichtung auch Teillösungen ausgegeben werden.

### Kurze Beschreibung der Figuren

Weitere Merkmale und Vorzüge der Erfindung werden nun im Zusammenhang mit den beigefügten Zeichnungen beschrieben, in denen:
- Fig. 1 ein Blockschaltbild einer erfindungsgemäßen Vorrichtung darstellt;
- Fig. 2 einen Überblick einer Erstellung einer Lösung, die einer Aufgabe zugeordnet ist, darstellt
- Fig. 3 ein exemplarisches Zustands-Übergangs-System darstellt;
- Fig. 4 ein Ablaufdiagramm eines erfindungsgemäßen Verfahrens darstellt;
- Fig. 5 ein Teilverfahren darstellt, welches gegen einen Teil des in Fig. 4 gezeigten Verfahrens ausgetauscht werden kann.

In den Figuren bezeichnen gleiche Referenzzeichen gleiche Elemente.

### Beschreibung eines bevorzugten Ausführungsbeispiels

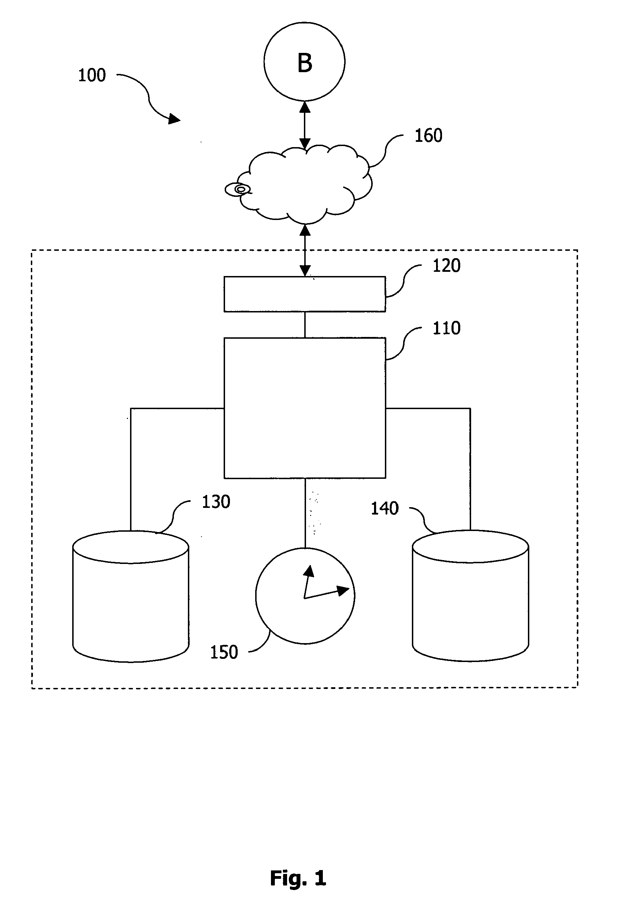

Fig. 1 zeigt ein Blockschaltbild einer Vorrichtung 100 zur Bearbeitung einer kollaborativ lösbaren Aufgabe. Eine Verarbeitungseinheit 110 ist mit einer Kommunikationsschnittstelle 120, zwei Datenbanken 130 und 140 sowie einem Zeitgeber 150 verbunden. Die Netzwerkschnittstelle 120 ist mit einem Netzwerk 160 verbunden, dessen genaue Topologie und Ausprägung hier nicht von weiterem Belang ist, und das deshalb als Wolke dargestellt ist. Ebenfalls mit dem Netzwerk 160 verbunden ist ein Bearbeiter B, beispielsweise unter Verwendung eines kommunikationsfähigen Personal-Computers.

Die Verarbeitungseinheit 110 kann beispielsweise ein handelsüblicher Computer oder auch ein Steuerrechner sein. Die Datenbanken 130 und 140 können jeweils auf eine beliebige, dem Fachmann bekannte Technik implementiert sein. Beispielsweise kann jede der Datenbanken 130 und 140 in Form eines Dateisystems, einer Software-Implementation einer Datenbank, als dedizierte Hardware oder als Netzwerk-Dienst ausgeführt sein. Insbesondere können sich die beiden Datenbanken 130 und 140 Ressourcen teilen. Die Datenbank 130 enthält eine Repräsentation der kollaborativ lösbaren Aufgabe. Die Datenbank 140 enthält Teillösungen und aus den Teillösungen zusammengeführte Teillösungen bzw. die der Aufgabe zugeordnete Lösung. Die Aufteilung der Datenbanken 130 und 140 dient vorwiegend dem Zweck der besseren Darstellung des Funktionsprinzips der Erfindung. Unbeschadet der Wirkungsweise der Erfindung kann auch eine einzige Datenbank oder eine beliebige andere Speichereinrichtung verwendet werden.

Der Zeitgeber 150 ist ausgebildet, ein Eintreten von zeitlich definierten Ereignissen zu erfassen. In einer Ausgestaltung umfasst der Zeitgeber 150 eine Ereignisliste, beispielsweise nach Art eines Kalenders, in welche Zeitpunkte eingetragen werden, die jeweils einem Ablauf einer Bearbeitungszeit einer Teilaufgabe entsprechen. Erreicht der durch den Zeitgeber 150 bestimmte momentane Zeitpunkt einen solchen Eintrag, so wird ein Signal an die Verarbeitungseinheit 110 gesendet. Die Zeitpunkte können auch in einer der beiden Datenbanken 130 und 140 gespeichert sein.

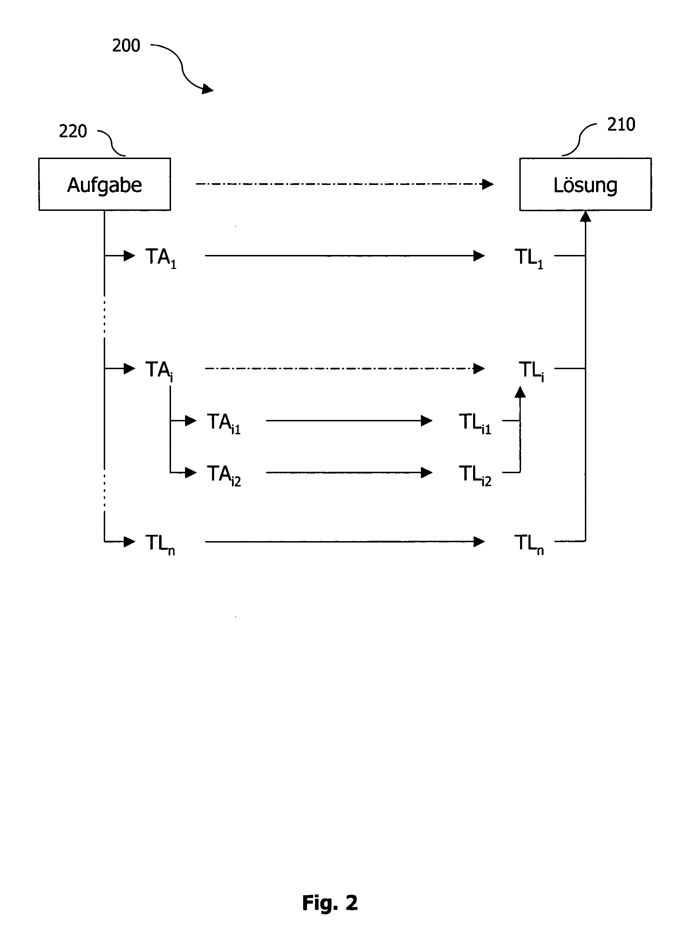

Fig. 2 zeigt einen Überblick 200 über eine Erstellung einer Lösung 210, die einer Aufgabe 220 zugeordnet ist. Die Aufgabe 220 wird in Teilaufgaben TA1 bis TAn aufgeteilt. Zu jeder dieser Teilaufgaben wird eine ihr zugeordnete Teillösung TL1 bis TLn erstellt. Die Teillösungen werden dann zur Lösung 210 zusammengeführt.

Im Fall der Teilaufgabe TAi wird die ihr zugeordnete Teillösung TLi nicht unmittelbar erstellt, sondern die oben beschriebene Vorgehensweise erneut (rekursiv) appliziert, indem die Teilaufgabe TAi ihrerseits in die Teilaufgaben TAi1 und TAi2 unterteilt wird. Anschließend werden den Teilaufgaben TAi1 und TAi2 jeweils zugeordnete Teillösungen TLi1 und TLi2 erstellt und zu einer Teillösung TLi zusammengeführt, die der Teilaufgabe TAi zugeordnet ist.

Bezüglich der Teilaufgaben TAi1 und TAi2 bzw. der Teillösungen TLi1 und TLi1 kann von der Teilaufgabe TAi auch als übergeordnete Teilaufgabe und von der Teillösung TLi als übergeordnete Teillösung gesprochen werden.

Die Zusammenführung von Teillösungen zu einer Lösung oder übergeordneten Teillösung kann in einem oder auch in mehreren Schritten erfolgen. Nicht in Fig. 2 dargestellt sind logische Abhängigkeiten zwischen den Teilaufgaben, die bedingen können, dass eine Teilaufgabe erst dann bearbeitet werden kann, wenn eine oder mehrere Teillösungen bereits vorliegen.

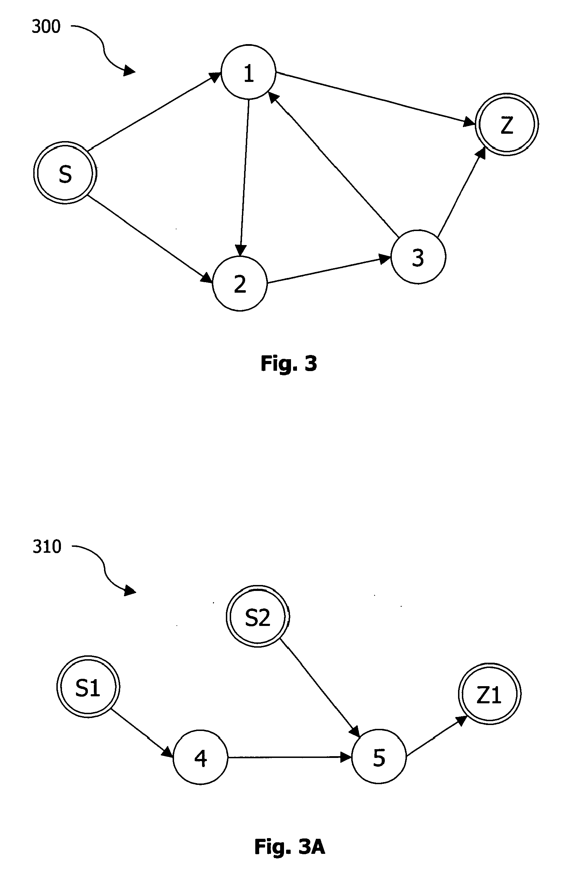

Fig. 3 zeigt einen ein Zustands-Übergangs-System bzw. einen Endlichen Automaten 300. Der dargestellte Endliche Automat umfasst einen Startzustand S und einen Zielzustand Z, die jeweils durch doppelte Kreise dargestellt sind, sowie drei weitere Zwischenzustände 1, 2 und 3, die jeweils durch einfache Kreise dargestellt sind. Übergänge in Form von Pfeilen verbinden einige der Zustände paarweise miteinander. Das dargestellte System befindet sich immer in genau einem Zustand, wobei es beim Startzustand S beginnt und beim Zielzustand Z endet. Der dargestellte Endliche Automat ist nicht deterministisch, da beispielsweise vom Zustand S mehr als ein Übergang ausgeht.

Die Übergänge zwischen Zuständen des Endlichen Automaten 300 unterliegen Bedingungen (nicht dargestellt). Vom Startzustand S aus kann beispielsweise der Zustand 1 erreicht werden, falls eine erste Bedingung zutrifft, die dem Übergang vom Zustand S in den Zustand 1 ("S-1") zugeordnet ist. Trifft eine zweite Bedingung zu, so kann entlang des Übergangs S-2 aus dem Startzustand in den Zustand 2 übergegangen werden.

Je nachdem, welche Bedingungen in welchen Zuständen vorliegen, kann beispielsweise eine Folge von Zuständen vom Startzustand S zum Zielzustand Z ausgedrückt sein durch S-1-Z. Bei Vorliegen anderer Bedingungen kann die Folge beispielsweise durch S-1-2-3-1-2-3-Z dargestellt sein.

Mit Hilfe eines Endlichen Automaten können konkrete Zustände eines Systems modelliert werden. Beispielsweise ist es in der Steuer-, Mess- und Regeltechnik bekannt, ein Verhalten eines Systems, etwa einer Prozesssteuerung oder einer Verarbeitungseinheit, durch einen Endlichen Automaten zu modellieren. Einzelne durchzuführende Prozessschritte werden in den Zuständen (hier: S, 1, 2, 3, Z) durchgeführt, wobei Bedingungen geändert werden können, die einen Übergang zu einem Folgezustand beeinflussen können. Anschließend wird geprüft, ob Bedingungen vorliegen, die einen Übergang in einen Folgezustand ermöglichen. Bei geeigneter Wahl eines Endlichen Automaten kann ein Systemverhalten einer solchen Steuerung vollständig modelliert werden. Es ist möglich, z. B. Methoden des automatischen Beweisens anzuwenden, um beispielsweise vorgegebene Folgen auf Generierbarkeit oder bestimmte Zustände auf Erreichbarkeit zu untersuchen, eine Schleifenfreiheit nachzuweisen oder andere, beispielsweise eine Betriebssicherheit des modellierten Systems betreffende Aussagen automatisch zu generieren.

Fig. 3A zeigt einen weiteren Endlichen Automaten (bzw. ein Zustands-Übergangs-System) 310. Der Endliche Automat 310 stellt eine Konkretisierung des Zustands 2 des Endlichen Automaten 300 in Fig. 3 dar. Die im Endlichen Automaten 310 gezeigten Zustände und Übergänge repräsentieren also Vorgänge, welche innerhalb des Zustands 2 des Endlichen Automaten 300 ablaufen. Der Startzustand S1 in Fig. 3A entspricht dem Ende des Übergangs, der in Fig. 3 vom Zustand S in den Zustand 2 führt. In ähnlicher Weise entspricht der Zustand S2 des Endlichen Automaten 310 dem Ende des vom Zustand 1 in den Zustand 2 führenden Übergangs, und der Zustand Z1 dem Anfang des Übergangs vom Zustand 2 in den Zustand 3 im Endlichen Automaten 300 in Fig. 3. Mit anderen Worten, die Startzustände des Endlichen Automaten 310 entsprechen jeweils Übergängen des Endlichen Automaten 300, welche in dessen Zustand 2 in hineingehen, und der Zielzustand Z1 des Endlichen Automaten 310 entspricht dem Übergang, welcher aus dem Zustand 2 des Endlichen Automaten 300 hinausführt.

Der dargestellte Endliche Automat 310 ist deterministisch, da von jedem der Zustände S1, S2, Z1, 4 und 5 jeweils nur ein Übergang wegführt. Dementsprechend kann ein Übergang vom Zustand S1 in den Zustand Z1 nur durch die Kette S1-4-5-Z1 erfolgen. Ein Übergang vom Zustand S2 in den Zustand Z1 kann nur durch die Kette S2-5-Z1 erfolgen.

Wie aus den Figuren 3 und 3A deutlich wird, ist ein Endlicher Automat allgemein geeignet, Systeme darzustellen, und Komplexität in Zuständen zu kapseln. Insbesondere ist es möglich, eine derartige Kapselung rekursiv durchzuführen, so dass unterschiedliche Ebenen entstehen, welche das System auf unterschiedlichen Detaillierungsgraden beschreiben.

Eine Darstellung eines Endlichen Automaten kann regelbasiert umgeformt werden. Beispielsweise ist es möglich, in einem Endlichen Automaten einen oder mehrere Zustände durch weitere Endliche Automaten zu ersetzen, welche die Zustände repräsentieren. Dieser Vorgang kann so oft wiederholt werden, bis jedes bekannte Detail des beschriebenen Systems in einem zusammenhängenden Endlichen Automaten dargestellt ist. Anschließend kann dieser Endliche Automat wieder vereinfacht werden, indem Gruppen von Zuständen und diese Zustände verbindende Übergängen jeweils in einem übergeordneten Zustand zusammengefasst werden. Dabei kann es vorteilhaft sein, übergeordnete Zustände derart zu bilden, dass Charakteristika von Zuständen und Übergängen, welche sie einkapseln, ähnlich sind. Ein übergeordneter Zustand kann in einem gegebenen System auch mehrfach, beispielsweise nach Art einer Bibliothek, verwendet werden.

Ein Endlicher Automat eignet sich allgemein sehr gut dazu, Aufgaben bzw. Abläufe darzustellen. Im Zusammenhang mit dem Ausführungsbeispiel 300 wird ein Endlicher Automat, bzw. eine Verschachtelung Endlicher Automaten, dazu verwendet, die Aufgabe darzustellen, die kollaborativ gelöst werden soll. Einem Bearbeiter kann beispielsweise als Teilaufgabe der Zustand 2 aus Fig. 3 zugeordnet werden, der durch den Endlichen Automaten 310 in Fig. 3A genauer beschrieben ist. Je nachdem, welcher Natur die kollaborativ zu lösende Aufgabe ist, kann der Bearbeiter B beispielsweise dafür sorgen, dass ihm überantwortete Materialien, welche sich in den Zuständen S1 oder S2 befinden, in den Zustand Z1 überführt werden. Handelt es sich bei der Aufgabe um eine verteilte Programmieraufgabe, so kann es Aufgabe des Bearbeiters sein, einen Mechanismus zu entwickeln, welcher Daten, die sich in den Zuständen S1 bzw. S2 befinden, über die Zustände 4 und 5 bzw. über den Zustand 5 in den Zustand Z1 zu verarbeiten. Hat der Bearbeiter seine Aufgabe erledigt, kann das Ergebnis seiner Arbeit als Zustand 2 des Endlichen Automaten 300 in Fig. 3 eingefügt werden. Dieses Zusammenfügen kann Bestandteil der Aufgabe eines anderen Bearbeiters sein, oder in automatischer Weise durchgeführt werden. Eine einem Bearbeiter zugeordnete Teilaufgabe ist als eine Menge mittels Übergängen partiell miteinander verbundener Zustände charakterisiert.

Endliche Automaten stellen ein mögliches Modell dar, mit dem eine kollaborativ lösbare Aufgabe spezifiziert werden kann. Je nachdem, wie die aktuell zu lösende Aufgabe gelagert ist, kann es erforderlich sein, das Modell der Endlichen Automaten geeignet auszugestalten. Beispielsweise kann es erforderlich sein, Objekte zu definieren, die entlang von Übergängen von einem Zustand in einen anderen übergeben werden. Es ist beispielsweise in der Steuer-, Mess- und Regeltechnik, der Sicherheitstechnik, in der Raumfahrt oder bei der Zeichenkettenverarbeitung bekannt, Systeme als Endliche Automaten ausdrücken.

Im Bereich der Programmierung kann eine Modellierung einer Aufgabe entsprechend den obigen Ausführungen beispielsweise mittels der Entwicklungsumgebung Steed.net realisiert werden. Steed.net erlaubt die Verwendung unterschiedlicher Werkzeuge (Programmiersprachen) zur Bearbeitung von durch Endliche Automaten modellierten Teilaufgaben.

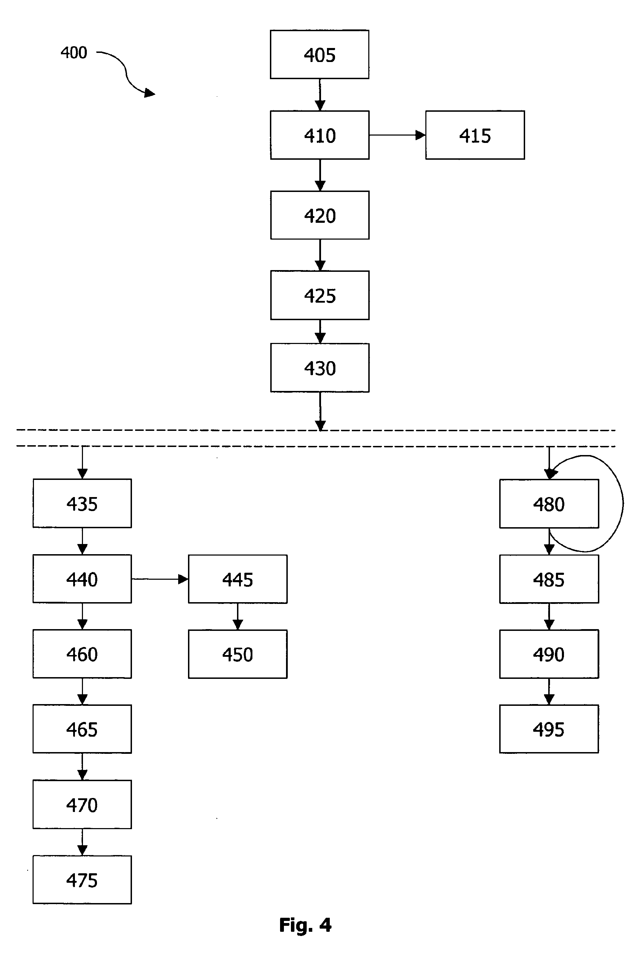

Fig. 4 zeigt ein Ablaufdiagramm 400 eines Verfahrens zum Verwalten einer kollaborativ lösbaren Aufgabe 220. Das Verfahren läuft auf einem System 100, wie in Fig. 1 gezeigt, ab. Vor Ablauf des Verfahrens ist eine Aufgabe 220 bereitgestellt, zu der eine zugeordnete Lösung 210 bereitgestellt werden soll.

In Schritt 405 wird ein Angebot von einem Bearbeiter B empfangen. Anschließend wird in Schritt 410 eine Teilaufgabe aus der Aufgabe 220 bzw. aus einer Teilaufgabe der Aufgabe erstellt. Vorzugsweise erfolgt dieser Schritt auf der Basis von Informationen, welche dem in Schritt 405 empfangenen Angebot des Bearbeiters B entnommen werden. Zusätzlich kann eine Erstellung einer Teilaufgabe weitere Informationen berücksichtigen. Beispielsweise kann bekannt sein, welche Teilaufgaben der Bearbeiter B in der Vergangenheit bearbeitet hat, so dass eine Teilaufgabe erstellt werden kann, welche möglichst ähnlich strukturiert ist wie eine der zurückliegenden Teilaufgabe des Bearbeiters B. In einer Ausgestaltung kann der Bearbeiter B in seinem Angebot auch Informationen über eine gewünschte Struktur einer Teilaufgabe geben. Eine Mehrfachvergabe einer Teilaufgabe an mehrere Bearbeiter B kann in einer weiteren Ausgestaltung ebenfalls erfolgen.

Ist keine Teilaufgabe erstellbar, beispielsweise weil eine Mehrfachvergabe von Teilaufgaben nicht erwünscht und alle aus der Aufgabe erstellbaren Teilaufgaben bereits zugeordnet sind, oder auch deshalb, weil keine Teilaufgabe erstellbar ist, die den Vorgaben des Bearbeiters B in dessen Angebot nahe genug kommt, so endet das Verfahren in Schritt 415. Andernfalls erfolgt in einem Schritt 420 eine Zuordnung der erstellten Teilaufgabe zu dem Angebot und eine Zuordnung des Angebots zu dem Bearbeiter B. In einer Ausgestaltung des Verfahrens kann auch bereits an dieser Stelle eine "leere" Teillösung der Teilaufgabe erstellt und der Teilaufgabe zugeordnet werden.

In einem folgenden Schritt 425 wird eine Bearbeitungszeit bestimmt und ein entsprechender Timer gestartet. Die Bearbeitungszeit und der Timer werden dem Bearbeiter B bzw. der Teilaufgabe zugeordnet.

In einem Schritt 430 wird die Teilaufgabe bereitgestellt. Dies kann beispielsweise auch selektiv erfolgen, indem dafür gesorgt wird, dass lediglich der Bearbeiter B, auf dessen Angebot hin die Teilaufgabe erstellt wurde, auf die Teilaufgabe zugreifen kann. Alternativ hierzu kann der Bearbeiter B beispielsweise auch darüber benachrichtigt werden, auf welche Weise er die Teilaufgabe abholen kann. Beim Abholen der Teilaufgabe kann sich der Bearbeiter dann identifizieren müssen.

In einer Variation kann die Teilaufgabe auch an den Bearbeiter versendet werden.

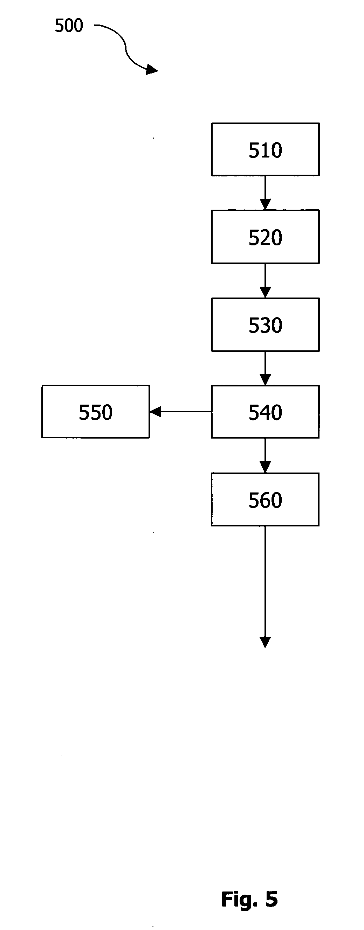

Eine alternative Vorgehensweise zu den beschriebenen Schritten 405 bis 430 wird unten mit Bezug auf Fig. 5 dargelegt.

An dieser Stelle des Verfahrens ist eine Vergabe einer Teilaufgabe an einen Bearbeiter B abgeschlossen. Die im Folgenden ausgeführten Schritte 435 bis 475 setzen voraus, dass der Bearbeiter eine Teillösung erstellt und zurücksendet.

In einem Schritt 435 wird eine Teillösung empfangen, abgespeichert und der Teilaufgabe zugeordnet, falls dies nicht bereits erfolgt ist, z. B. in Schritt 420.

In Schritt 440 wird bestimmt, ob die empfangene Teillösung die ihr zugeordnete Teilaufgabe löst. Hierfür werden allgemein bekannte bzw. die oben ausgeführten Techniken angewendet. Löst die Teillösung die Teilaufgabe nicht, wird in einem Schritt 445 der Bearbeiter B von diesem Umstand benachrichtigt. B hat nun die Möglichkeit, die Teillösung nachzubessern, wozu ihm eine neue Bearbeitungszeit zugeordnet werden kann. In einer Variante wird in einem folgenden Schritt 450 die Teilaufgabe als "zu vergeben" gekennzeichnet und kann daraufhin einem anderen Bearbeiter zugeordnet werden, um eine alternative bzw. parallele Bearbeitung zu ermöglichen. Das Verfahren endet an dieser Stelle.

Wird in Schritt 440 andererseits bestimmt, dass die empfangene Teillösung die Teilaufgabe löst, so fährt das Verfahren mit Schritt 460 fort. In diesem wird bestimmt, ob die empfangene Teillösung mit anderen Teillösungen zusammenführbar ist. Eine Zusammenführbarkeit kann dann gegeben sein, wenn weitere Teillösungen bereits vorliegen, die in einem logischen Zusammenhang mit der empfangenen Teillösung stehen. Ist die Teillösung nicht zusammenführbar, endet das Verfahren. Andernfalls wird in einem Schritt 465 die Teillösung mit einer oder mehreren anderen Teillösungen zusammengeführt. In einem darauf folgenden Schritt 470 wird geprüft, ob das Resultat der Zusammenführung eine Lösung der Aufgabe ist. Ist dies nicht der Fall, so endet das Verfahren. Andernfalls wird in einem Schritt 475 die Lösung der Aufgabe ausgegeben und das Verfahren endet.

Aus logischer Sicht ist es vorteilhaft, die Schritte 405 bis 430 des Verfahrens als getrennt von den Schritten 435 bis 475 zu betrachten. Auf diese Weise kann leichter nachvollzogen werden, wie ein Zuordnen von Teilaufgaben zu Bearbeitern separat von einem Empfangen, Überprüfen und Zusammenführen von Teillösungen zu einer Lösung abläuft. Diese Unterteilung ist in Fig. 4 als doppelte horizontale gestrichelte Linie dargestellt. Zwischen den beiden Linien erfolgt die Erstellung einer Teillösung durch den Bearbeiter B.

Parallel zu den beschriebenen Schritten 435 bis 475 wird in einem Schritt 480 überprüft, ob ein Timer abgelaufen ist, der das Ende einer Bearbeitungszeit der dem Bearbeiter zugeordneten Teilaufgabe signalisiert. Das Überprüfen aller gestarteten Timer in Schritt 480 läuft fortwährend ab, wie durch den von Schritt 480 ausgehenden und zu Schritt 480 zurückkehrenden Pfeil angedeutet ist. Ist einer der Timer abgelaufen, so verzweigt das Verfahren in Schritt 485, welcher parallel zu einer weiterlaufenden Überprüfung eventueller weiterer Timer in Schritt 480 durchgeführt wird. In Schritt 485 wird der Bearbeiter benachrichtigt, der dem abgelaufenen Timer zugeordnet ist. Dieser Schritt kann ein Setzen eines neuen Timers umfassen, der eine dem Bearbeiter zugebilligte Extra-Bearbeitungszeit repräsentiert. In einem darauf folgenden Schritt 490 kann die dem Timer zugeordnete Teilaufgabe als nicht bearbeitet gekennzeichnet werden. Die Verarbeitung dieses Zweiges endet im Schritt 495.

Das in Fig. 5 dargestellte Teilverfahren 500 stellt eine Variation der Schritte 405 bis 430 in Fig. 4 dar. Der maßgebliche Unterschied des Teilverfahrens 500 zu den Schritten 405 bis 340 des Verfahrens 400 in Fig. 4 besteht in der umgekehrten Reihenfolge der Schritte des Empfangens eines Angebotes von einem Bearbeiter (405, 530) und des Erstellens einer Teilaufgabe aus der Aufgabe (410, 520).

In Schritt 510 werden eine oder mehrere Teilaufgaben aus der Aufgabe erstellt. Diese Erstellung kann beliebigen Vorgaben folgen. In einem folgenden Schritt 520 werden die eine oder mehrere Teilaufgaben bereitgestellt, d. h., dass einem oder mehreren Bearbeitern die Möglichkeit eröffnet wird, auf die eine oder mehrere Teilaufgaben zuzugreifen. Dies kann beispielsweise dadurch realisiert werden, dass die Teilaufgaben, oder gewisse Informationen über die Teilaufgaben, auf einem Webserver bereitgestellt werden. Die Bereitstellung kann beispielsweise auch öffentlich sein, so dass ein potentieller Bearbeiter die Teilaufgaben durchsehen kann, bevor er ein Angebot abgibt und sich dadurch als Bearbeiter anbietet. Ein Zugriff auf die Teilaufgaben oder gewisse Aspekte der Teilaufgaben kann eine Authentifizierung bzw. eine Registrierung eines potentiellen Bearbeiters erfordern.

In einem Schritt 530 wird ein Angebot von einem Bearbeiter empfangen. Dieses Angebot bezieht sich auf ein Erstellen einer Teillösung zu einer Teilaufgabe, die in Schritt 520 bereitgestellt wurde. Eine Zuordnung zwischen dem Bearbeiter und einer Teilaufgabe wurde also durch den Bearbeiter getroffen, der die Entscheidung für ein Angebot zur Bearbeitung einer bestimmten Teilaufgabe anhand der ihm zugänglichen Informationen über die bereitgestellten Teilaufgaben treffen konnte.

In einem Schritt 540 erfolgt eine Zuordnung zwischen einer Teilaufgabe, einem Angebot und einem Bearbeiter. Sollte eine derartige Zuordnung nicht möglich sein, beispielsweise weil alle bereitstellbaren Teilaufgaben bereits Bearbeitern zugeordnet sind und eine Mehrfachzuordnung von Bearbeitern zu einer Teilaufgabe nicht erwünscht ist, so endet das Verfahren in einem Schritt 550. Andernfalls wird in einem Schritt 560 eine Bearbeitungszeit bestimmt, und ein entsprechender Timer wird gestartet. Der Zustand am Ende des Schritts 560 ist mit dem am Ende des Schritts 430 vergleichbar. In einer weiteren Ausgestaltung des Verfahrens können die Schritte 405 bis 430 parallel zu den Schritten 510 bis 560 ausgeführt werden, um beide Varianten parallel zu verfolgen. Insbesondere können Teilaufgaben, deren zugeordnete Teillösungen nicht ablaufgerecht für eine weitere Verarbeitung zur Verfügung stehen (z.B., weil sie nicht vor Ablauf des Timers eingereicht wurden, weil sie die zugeordnete Teilaufgabe nicht lösen, weil der Bearbeiter die Bearbeitung nachträglich verweigert, etc.), nach dem Teilverfahren 500 erneut bereitgestellt werden, um sie einem Bearbeiter zuzuordnen.

In einer Ausgestaltung ist es z. B. auch möglich, eine Teilaufgabe mehr als nur einmal einem Bearbeiter zuzuordnen, um durch parallele Bearbeitung für Redundanz zu sorgen oder später unter mehreren Teillösungen wählen zu können. Eine solche Wahl kann beispielsweise auf Grundlage von Tests wie in Schritt 440 erfolgen.

## Patentansprüche

1. Verfahren zum Bearbeiten einer kollaborativ lösbaren Aufgabe, umfassend folgende Schritte:
a) Empfangen eines Angebots zur Erstellung einer Teillösung;
b) Bereitstellen einer auf Basis der Aufgabe erstellten Teilaufgabe;
c) Empfangen einer der Teilaufgabe zugeordneten Teillösung; und
d) Zusammenführen von Teillösungen zu einer der Aufgabe zugeordneten Lösung.

2. Verfahren nach Anspruch 1, ferner umfassend das Erstellen mehrerer Teilaufgaben.

3. Verfahren nach einem der vorangehenden Ansprüche, wobei ein Angebot einen Hinweis auf eine Kapazität eines Bearbeiters beinhaltet.

4. Verfahren nach einem der vorangehenden Ansprüche, ferner umfassend das Bestimmen einer einer Teilaufgabe zugeordneten Komplexität.

5. Verfahren nach Anspruch 4, wobei die Teilaufgabe derart erstellt ist, dass die Komplexität der Teilaufgabe der Kapazität eines empfangenen Angebots im Wesentlichen entspricht.

6. Verfahren nach einem der vorangehenden Ansprüche, wobei das die Teilaufgabe derart erstellt ist, dass eine Struktur der Teilaufgabe wenigstens abschnittsweise einer Struktur einer zuvor erstellten Teilaufgabe entspricht.

7. Verfahren nach einem der vorangehenden Ansprüche, ferner umfassend den Schritt des Überwachens, ob eine einer Teilaufgabe zugeordnete Teillösung vor Ablauf einer der Teilaufgabe zugeordneten Bearbeitungszeit empfangen wurde.

8. Verfahren nach einem der vorangehenden Ansprüche, wobei das Verfahren rekursiv auf der erstellten Teilaufgabe durchgeführt wird.

9. Computerprogrammprodukt mit Programmcodemitteln zur Durchführung eines Verfahrens nach einem der vorangegangenen Ansprüche, wenn das Computerprogramm auf einer Verarbeitungseinheit läuft.

10. Computerprogrammprodukt nach dem vorangehenden Anspruch, wenn es auf einem computerlesbaren Datenträger gespeichert ist.

11. Vorrichtung zur Bearbeitung einer kollaborativ lösbaren Aufgabe, umfassend:
a) eine erste Empfangseinrichtung zum Empfangen eines Angebotes zur Erstellung einer Teillösung;
b) eine erste Verarbeitungseinrichtung zum Erstellen einer Teilaufgabe auf Basis der Aufgabe;
c) eine Bereitstellungseinrichtung zur Bereitstellung der Teilaufgabe;
d) ein zweite Empfangseinrichtung zum Empfangen einer Teillösung; und
e) eine zweite Verarbeitungseinrichtung zur Zusammenführung von Teillösungen zu einer der Aufgabe zugeordneten Lösung.

12. Vorrichtung nach Anspruch 11, **dadurch gekennzeichnet, dass** es Datenbankmittel zur Speicherung von Teilaufgaben und/oder Teillösungen umfasst.

13. Vorrichtung nach einem der Ansprüche 11 oder 12, **dadurch gekennzeichnet, dass** es Datenbankmittel zur Speicherung von den Teillösungen zugeordneten Teilaufgaben, Bearbeitern, Angeboten und/oder Bearbeitungszeiten.

14. Vorrichtung nach einem der Ansprüche 11 bis 13, **dadurch gekennzeichnet, dass** es einen Zeitgeber zur Überwachung eines Ablaufs einer einer Teilaufgabe zugeordneten Bearbeitungszeit umfasst.

15. Vorrichtung nach einem der Ansprüche 11 bis 14, **dadurch gekennzeichnet, dass** es eine Ausgabeeinrichtung zur Ausgabe einer der Aufgabe zugeordneten Lösung umfasst.
